# FASCICULE DE BREVET EUROPEEN

(11) **EP 3 729 618 B1**
(45) Date de publication et mention de la délivrance du brevet: **10.04.2024**
(21) Numéro de dépôt: 18822390.3
(22) Date de dépôt: 21.12.2018
(51) Int. Cl.: H02K 26/00

(54) **ACTIONNEUR A ENTRAINEMENT DIRECT COMMANDÉ EN BOUCLE OUVERTE**
STELLANTRIEB MIT STEUERDIREKTANTRIEB MIT OFFENER SCHLEIFE
ACTUATOR WITH OPEN-LOOP CONTROL DIRECT DRIVE

(30) Priorité: 21.12.2017 FR 1762829
(43) Date de publication de la demande: 28.10.2020
(73) Titulaire: MMT AG, 6300 Zug (CH)
(72) Inventeur: FOUCAUT, Antoine, 70190 Montarlot les Rioz (FR); GEMBERLÉ, Pierre, 2503 Biel/Bienn (CH); BOURGADE, Antoine, 2504 Biel/Bienne (CH)
(74) Mandataire: IP Trust
(86) Numéro de dépôt international: PCT/EP2018/086501
(87) Numéro de publication internationale: WO 2019/122299

(56) Documents cités:
- EP-A1- 1 615 320
- EP-A1- 2 014 805
- EP-A2- 1 122 868
- WO-A1-2012/023159
- FR-A1- 2 887 376
- US-A1- 2017 133 907

## Description

### Domaine de l'invention

La présente invention concerne le domaine des actionneurs électriques à entraînement direct déplaçant un organe de commande sur une course angulaire limitée. De tels actionneurs peuvent, par exemple, servir à entraîner une commande du déplacement d'un arbre à came d'un moteur à explosion.

### Etat de la technique

On connaît dans l'état de la technique le brevet EP1897211 concernant un servo-actionneur électromagnétique monophasé composé d'un actionneur rotatif destiné à déplacer un organe mobile sur une course limitée, comportant une structure statorique à 2N pôles, N étant égal à 1 ou 2, et au moins une bobine d'excitation, ladite structure statorique étant réalisée en un matériau de haute perméabilité magnétique, et un rotor présentant une culasse ferromagnétique et une partie mince aimantée constituée de 2N paires de pôles aimantés axialement, en sens alterné et d'un capteur de position angulaire du rotor. Ces servo-actionneurs sont généralement utilisés en boucle fermée, c'est-à-dire avec un contrôle continu du mouvement grâce au retour d'information donné par le capteur de position, afin de garantir un positionnement précis.

On connaît aussi la demande de brevet WO2012023159A1 décrivant un dispositif de restriction de plage de mouvement de rotation destiné à un solénoïde rotatif qui inclut une paire de parties de restriction de la plage de mouvement de rotation (Zr) d'une partie de mise en prise qui tourne intégralement avec l'arbre d'un rotor à aimant. Lors de la configuration du dispositif de restriction de plage de mouvement de rotation, la partie de mise en prise est équipée d'un moyen de restriction de mouvement incluant un mécanisme communiquant une inertie statique permettant de communiquer une inertie statique au moyen d'une force d'inertie prédéterminée et un mécanisme de freinage permettant de freiner au moyen d'une force de freinage prédéterminée. Lorsque la partie de mise en prise tourne depuis une position d'arrêt (Xp ou Xq) restreinte par une partie de restriction vers l'autre position d'arrêt (Xq ou Xp) restreinte par l'autre partie de restriction, la partie de mise en prise se déplace d'une position de verrouillage temporelle (Xm) vers l'autre position d'arrêt (Xq ou Xp), la position de verrouillage temporelle (Xm) étant placée à un intervalle de rotation prédéterminé (Ls) avant l'autre position d'arrêt (Xq ou Xp).

On connaît aussi la demande de brevet US2017133907 qui décrit un actionneur avec un stator, un rotor traversant le stator et tournant en interaction avec le stator sous l'effet d'une alimentation externe, un corps entraîné fonctionnant en fonction de la rotation d'un axe du rotor, un boîtier entourant le stator de telle sorte que l'axe du rotor est en saillie, et un ou plusieurs régulateurs d'angle de rotation installés sur un côté extérieur du boîtier et régulant un angle de rotation du rotor.

La demande de brevet FR2887376 propose une solution de servo-actionneur électromagnétique monophasé composé d'un actionneur rotatif destiné à déplacer un organe mobile sur une course limitée, comportant une structure statorique à 2N pôles, N étant égal à 1 ou 2, et au moins une bobine d'excitation, ladite structure statorique étant réalisée en un matériau de haute perméabilité magnétique, et un rotor présentant une culasse ferromagnétique et une partie mince aimantée constituée de 2N paires de pôles aimantés axialement, en sens alterné et d'un capteur de position angulaire du rotor caractérisé en ce que le capteur de position présente un émetteur de champ magnétique solidaire de la culasse et un récepteur dudit champ magnétique fixe par rapport à la structure statorique.

La demande de brevet EP1122868 décrit un actionneur rotatif à course limitée et à commande électrique comporte une bobine électrique, un circuit magnétique en un matériau magnétique ayant une bonne perméabilité magnétique, et un rotor pouvant effectuer une rotation de course limitée. Le rotor comprend un arbre, un aimant ou une partie d'aimant, et des moyens de limitation de course définissant deux positions en rotation stables. L'aimant est disposé de façon que, sans courant électrique, l'aimant ou la partie d'aimant est attiré vers le circuit magnétique, de sorte que le rotor est dans l'une des positions stables, mais qu'en appliquant un courant électrique dans la bobine pour créer un champ magnétique de direction opposée au champ magnétique de l'aimant ou de la partie d'aimant, le rotor bascule à l'autre position stable.

### Inconvénients de l'art antérieur

Les solutions de l'art antérieur présentent l'inconvénient de produire des chocs violents lorsque le déplacement du rotor est arrêté par des butées solides. Des chocs peuvent créer des rebonds et donc des positionnements erratiques, au moins transitoirement, lorsque les butées sont trop raides, et peuvent aussi créer une casse de ces butées due aux chocs répétés. Pour cette raison, les solutions de l'art antérieur utilisent souvent des capteurs de position et un pilotage en boucle fermée (avec capteur de position pour un retour continu d'information et une correction en continue du mouvement) pour ralentir le mouvement en fin de mouvement afin de protéger les butées. Cette solution complexifie néanmoins le produit et représente un cout non négligeable.

### Solution apportée par l'invention

Le but de la présente invention est de remédier à cet inconvénient cité en proposant un actionneur, commandé en boucle ouverte (c'est-à-dire une commande sans retour d'information continu d'un capteur de position), limitant les chocs en fin de course tout en assurant une grande fiabilité, robustesse de fonctionnement ainsi qu'une durée de vie accrue. A cet effet, l'invention concerne selon son acception la plus générale un actionneur rotatif sans balais présentant les caractéristiques énoncées par la revendication 1.
La course est limitée par deux butées.
Avantageusement, lesdites poutres sont en un matériau dont le ratio entre la contrainte à la rupture et le module d'élasticité est supérieur à 0.020 et la résistance au choc Charpy entaillé supérieure à 20 kJ/m².

Cette combinaison de poutre et de matériaux aux caractéristiques mécaniques favorables à un amortissement viscoélastique permet d'assurer une durée de vie importante au dispositif dans un cas de commande en boucle ouverte où l'on ne contrôle pas la position ou la vitesse en continu dans le but de minimiser la vitesse d'impact lors du déplacement d'une extrémité à l'autre de la course de l'actionneur.

De manière préférentielle mais non limitative, le matériau choisi pour la pièce de limitation de course et l'organe de commande est un matériau thermoplastique non chargé et lesdites poutres sont symétriques pour permettre un amortissement identique d'une extrémité à l'autre de la course. De même, l'actionneur peut accepter un ressort mécanique de rappel du mouvement en une position prédéfinie lors du pilotage en boucle ouverte, par exemple à l'arrêt de la tension de commande.

Précisément, la pièce de limitation de course présente :
- au moins deux plots de solidarisation avec ledit rotor et venant s'engager longitudinalement dans des logements complémentaires prévus à la surface de la culasse dudit rotor,
- au moins deux plots de limitation de course, s'étendant axialement du côté opposé audits plots de solidarisation du rotor, et mobile entre deux butées de limitation de course,
- un élément de centrage de ladite pièce par rapport à l'axe du rotor,
- des zones déformables élastiquement reliant un plot de solidarisation au plot de limitation de course consécutif.

Selon des variantes non exclusives les unes des autres :
- chacun desdits plots de solidarisation avec le rotor s'étend perpendiculairement à un bras radial,
- chacun desdits plots de limitation de course s'étend perpendiculairement à un bras radial, selon une direction opposée à la direction desdits plots de solidarisation,
- chacun desdits plots de limitation de course s'étend perpendiculairement à un bras radial déformable élastiquement,
- ledit bras radial déformable élastiquement est constitué par une patte fendue par une fente radiale,
- lesdits bras radiaux s'étendent jusqu'à une zone annulaire intermédiaire, et sont reliés par des ponts en forme d'épingle à cheveux s'étendant radialement,
- lesdits bras radiaux et lesdits ponts en forme d'épingle à cheveux s'étendent dans un premier plan, transversal, décalé par rapport à un second plan correspondant audit élément de centrage formé de bras reliant une zone centre annulaire pour le passage de l'axe du rotor, l'extrémité opposée desdits bras étant relié au point de jonction entre un bras radial et un desdits ponts,
- l'actionneur comporte un aimant annulaire entourant la zone intérieure comprise entre ledit axe et lesdits points de jonction entre un bras radial et un desdits ponts,
- l'extrémité avant de l'axe du rotor est solidaire d'une fourchette d'accouplement,
- l'extrémité avant de l'axe du rotor présente une configuration moletée pour recevoir une bague en laiton, une pièce en matière thermoplastique étant surmoulée sur ladite bague pour former l'organe de commande.

L'actionneur comprend préférentiellement un capteur de position destiné à renvoyer une information de la position du rotor afin de connaître l'état d'actionnement. Il s'agit typiquement d'un capteur digital retournant une information de type tout ou rien pour savoir si l'actionnement a été réalisé, c'est-à-dire si le rotor s'est déplacé sur sa course.

L'application de cet actionneur est typiquement, mais non limitativement, l'entrainement, via l'organe de commande, d'un levier solidaire d'un arbre à cames d'un véhicule motorisé.

A ce titre, l'invention concerne aussi un système de commande de la valeur de levée des soupapes d'un moteur à explosion comportant un arbre à cames présentant les caractéristiques énoncées par la revendication 17.

### Description détaillée d'un exemple non limitatif de l'invention

La présente invention sera mieux comprise à la lecture de la description détaillée d'un exemple non limitatif de l'invention qui suit, se référant aux dessins annexés où :
- la figure 1 représente une vue en coupe selon un plan longitudinal d'un actionneur selon l'invention,
- la figure 2 représente une vue de dessus de l'actionneur, sans son capot,
- la figure 3 représente une vue de dessous du capot de l'actionneur,
- la figure 4 représente une vue en perspective de la pièce de limitation de course,
- la figure 5 représente une vue en détail de l'organe d'actionnement.

### Description générale de l'actionneur

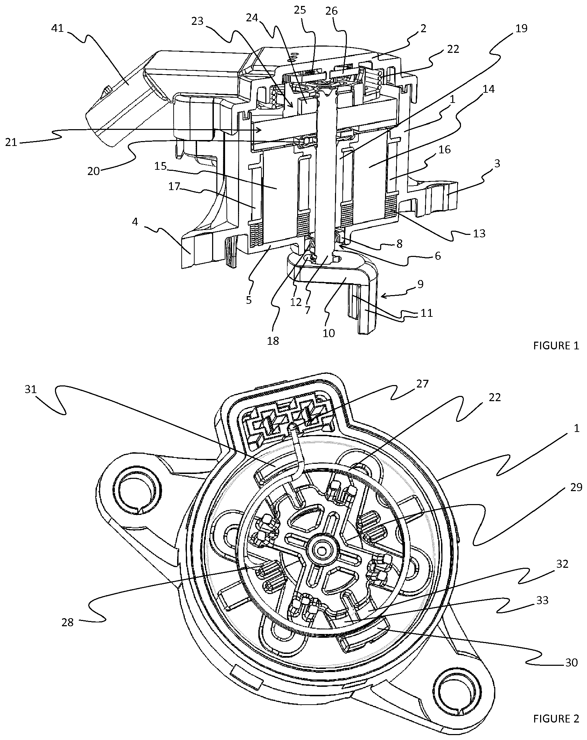

Les figures 1 à 3 illustrent la structure générale de l'actionneur.

Ce dernier est constitué par un boîtier (1) de forme générale cylindrique, fermé à l'extrémité arrière par un capot (2). Le boîtier (1) présente à sa partie avant des oreilles de fixation (3, 4). Il est fermé à sa partie avant par une face frontale (5) traversée par un passage central (6) pour le passage d'un axe (7). L'axe (7) est guidé par un palier (8) inséré dans le passage (6). Un joint à lèvre (18) assure l'étanchéité du passage (6).

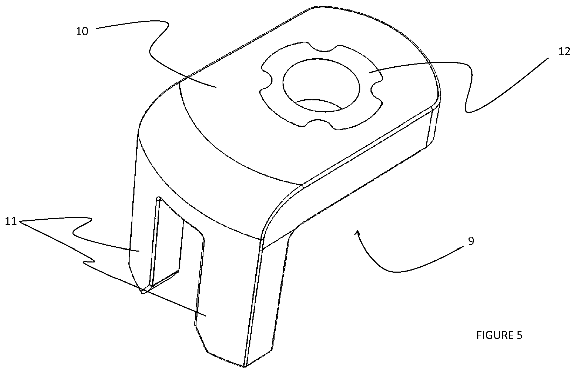

Cet axe (7) entraîne, à sa première extrémité, un organe de commande (9), dont le détail est montré en figure 5, présentant un bras (10) s'étendant radialement, prolongé par une fourche (11) s'étendant dans un plan perpendiculaire au bras (10). La liaison entre le bras (10) et l'axe (7) est assurée par une bague métallique (12) surmoulée dans le bras (10) et coopérant avec une extrémité moletée de l'axe (7). Le bras (10) et la forme de fourche (11) ont préférentiellement une fonction de poutre mécanique qui contribue à amortir le mouvement lorsque le rotor de l'actionneur atteint une extrémité de course dans un cas de fonctionnement de type tout ou rien (on/off). La matière utilisée pour cet organe de commande sera choisie afin d'optimiser la tenue mécanique et cette fonction d'amortissement, et sera par exemple une matière thermoplastique non chargée.

A titre d'exemple, la matière utilisée est de référence TW341 avec un module d'élasticité en traction de 1000 MPa, une contrainte à la rupture de 55 MPA, une résistance au choc Charpy entaillé de 35 kJ/m².

L'actionneur comprend de manière connue un stator formé par une plaque de base (13) constituée d'un empilement de plaques de tôles ferromagnétiques dans lesquelles sont chassées les pièces polaires (14, 15) en forme de portions de cylindre entourées, chacune, par une bobine (16, 17) de fils électriques.

Au centre du stator, l'actionneur présente un tube (19) en position centrale, qui entoure l'axe (7) et supporte à son extrémité arrière une butée axiale à billes (20) soutenant (supportant) le rotor (21) présentant de manière connue une culasse ferromagnétique portant des aimants permanents servant à l'actionnement en combinaison avec l'action des bobines (16, 17).

Cet ensemble entraîne le déplacement angulaire du rotor (21) dans une première direction lorsque le stator bobiné est alimenté en courant électrique. Un ressort (22) assure le déplacement angulaire (le rappel) du rotor (21) dans une direction angulaire opposée, jusqu'à son retour dans une position originelle.

Une pièce de limitation de course (23) solidaire du rotor (21), et positionnée à la deuxième extrémité de l'axe (7), limite son déplacement entre une position de repos, commandée par le ressort (22), et une position de travail commandée par l'alimentation électrique du stator.

Un aimant permanent annulaire (24) solidaire du rotor (21) fournit un champ magnétique détecté par une sonde magnétosensible (25) positionnée dans le prolongement de l'axe (7).

Cette sonde magnétosensible (25) est montée sur un circuit imprimé (26) fixée sur le capot (2).

Il est précisé que le capteur de position formé par l'aimant annulaire (24) et la sonde magnétosensible (25) est utilisé à des fins de connaissances grossières de la position du rotor (par exemple pour savoir si le rotor a effectué ou non le mouvement) mais qu'il n'est pas utilisé à des fins de pilotage en boucle fermée de l'actionneur.

La figure 2 montre plus en détail que l'une des extrémités du ressort (22) est fixée dans une encoche (27) prévue sur le boîtier (1). L'autre extrémité (28) est engagée dans une fourche (29) s'étendant sur la pièce de limitation de course (23).

La pièce de limitation de course (23) présente des plots de limitation de course (30, 31) de sections arquées, s'étendant perpendiculairement aux pattes radiales fourchues respectivement (32, 33). Le ressort (22) est logé à l'intérieur de l'enveloppe définie par la surface intérieure desdits plots de limitation de course (23, 24).

Les plots de limitation de course (30, 31) se déplacent entre deux butées fixes (34, 35 ; 36, 37) formées à l'intérieur du capot.

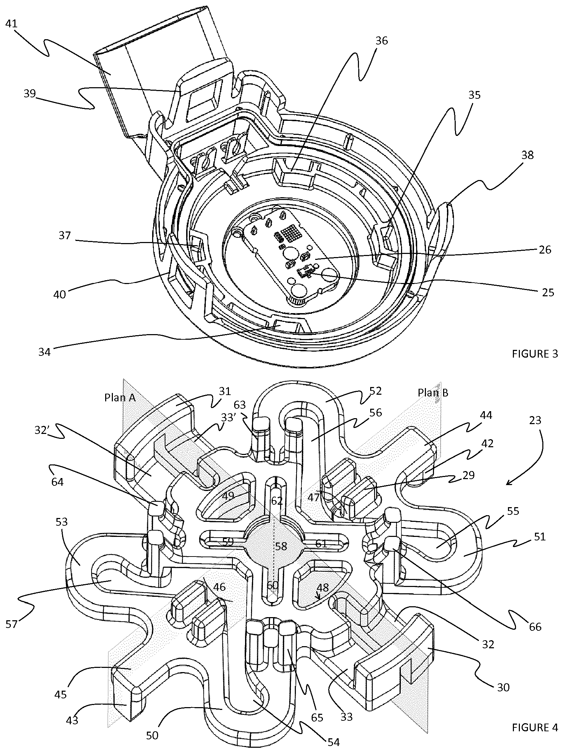

En figure 3, un connecteur (41) s'étend radialement par rapport au capot (2). Des clips de connexion (38, 39, 40) assurent la fixation, sans outil, du capot (2) sur le boîtier (1).

### Description détaillée de la pièce de limitation de course (figure 4)

La pièce de limitation de course (23) est constituée par une pièce injectée en matière plastique. Elle présente une première symétrie par rapport à un plan A longitudinal médian passant par les deux plots de limitation de course (30, 31), et une deuxième symétrie par rapport à un plan B longitudinal médian passant par les deux plots de solidarisation (42, 43) avec le rotor (21).

Ces deux plots de solidarisation (42, 43) s'étendent perpendiculairement aux bras respectivement (44, 45) et viennent s'engager dans une cavité complémentaire prévue à la surface arrière du rotor (21).

Ces bras (44, 45) ne rejoignent pas le centre de la pièce (23) mais s'étendent depuis une extrémité correspondant au rayon du rotor (21) jusqu'à un rayon intermédiaire (46, 47).

De la même façon, les bras (32, 33) ne rejoignent pas le centre de la pièce (23) mais s'étendent depuis une extrémité correspondant au rayon du rotor (21) jusqu'à un rayon intermédiaire (48, 49).

L'extrémité arrière d'un bras (44, 45) supportant le plot de liaison (42, 43) est reliée à l'extrémité arrière d'un bras (32, 33) adjacent supportant le plot de limitation de course (30, 31) par un pont (50, 51, 52, 53) en forme d'épingle (50 à 53).

Ces ponts (50, 51, 52, 53) s'étendent radialement et définissent une extrémité recourbée prolongée par deux bras séparés par une fente radiale (54 à 57). Cette fente (54 à 57) s'élargit légèrement du côté du plot de limitation le plus proche angulairement. Ces ponts (50, 51, 52, 53), formant des poutres mécaniques fléchissantes, offrent ainsi une déformation viscoélastique permettant d'amortir le choc et de dissiper son énergie lorsque les plots de limitation de course (30, 31) entrent en contact avec la butée (34, 35 ou 36, 37). Préférentiellement, par l'association des propriétés amortissantes cumulées entre cette pièce de limitation de course (23) et l'organe de commande (9), la viabilité et la durée de vie de l'actionneur dans l'application sont considérablement augmentées.

A l'intérieur de cette pièce (23) se trouve une configuration présentant un passage central (58) défini par quatre bras fendus (59 à 62) reliés à la zone de jonction entre un pont (50, 51, 52, 53) et un bras (32, 33, 44, 45).

Cette configuration se trouve dans un plan décalé axialement par rapport au plan défini par les ponts (50, 51, 52, 53) et les bras (32, 33, 44, 45).

Pour permettre un réglage optimal de la pré-charge du ressort, la pièce de limitation de butée présente plusieurs fourches (29, 63 à 66). L'extrémité mobile du ressort peut être engagée dans l'une quelconque de ces fourches (29, 63 à 66).

## Revendications

1. - Actionneur rotatif sans balais commandé électriquement en boucle ouverte comprenant un stator (14, 15) bobiné et un rotor cylindrique aimanté (21) solidaire d'un axe (7) présentant une première extrémité solidaire d'un organe de commande (9), la deuxième extrémité dudit axe étant solidaire d'une pièce de limitation de course (23) se déplaçant entre deux butées (34, 35, 36, 37), **caractérisé en ce que** ladite pièce de limitation de course (23) présente :
• des poutres élastiques fléchissantes (50, 51, 52, 53),
• au moins deux plots de solidarisation (42, 43) avec ledit rotor (21) venant s'engager longitudinalement dans des logements complémentaires prévus à la surface de la culasse dudit rotor (21)
• au moins deux plots de limitation de course (30, 31), s'étendant axialement du côté opposé auxdits plots de solidarisation (42, 43), mobiles entre deux butées de limitation de course (34 à 37),
• un élément de centrage (58) de ladite pièce par rapport à l'axe du rotor (22),
• des zones (50 à 53) élastiquement déformables formées par lesdites poutres élastiques fléchissantes (50, 51, 52, 53) reliant un plot de solidarisation (42, 43) au plot de limitation de course (30, 31) consécutif.

2. - Actionneur rotatif selon la revendication 1 **caractérisé en ce que** lesdites poutres fléchissantes (50, 51, 52, 53) de ladite pièce de limitation de course (23) et l'organe de commande sont en un matériau dont le ratio entre la contrainte à la rupture et le module d'élasticité est supérieur à 0.020 et la résistance au choc Charpy entaillé supérieure à 20 kJ/m².

3. - Actionneur rotatif selon la revendication 2 **caractérisé en ce que** le matériau utilisé pour l'une et/ou l'autre de la pièce de limitation de course (23) et de l'organe de commande (9) est un matériau thermoplastique non chargé.

4. - Actionneur rotatif selon la revendication 1 **caractérisé en ce que** lesdites poutres (50, 51, 52, 53) sont symétriques pour permettre un amortissement identique d'une extrémité à l'autre de la course.

5. - Actionneur rotatif selon l'une des quelconque des revendications précédentes **caractérisé en ce qu'**il comprend un ressort mécanique de rappel du mouvement en une position prédéfinie lors du pilotage en boucle ouverte.

6. - Actionneur rotatif selon l'une des revendications précédentes **caractérisé en ce que** ladite pièce de limitation de course (23) présente en outre
• un moyen d'ancrage d'une extrémité spirale d'un ressort (22), l'extrémité opposée dudit ressort (22) étant solidaire du boîtier (1) dudit actionneur.

7. - Actionneur rotatif selon la revendication précédente **caractérisé en ce que** chacun desdits plots de solidarisation (42, 43) s'étend perpendiculairement à un bras radial.

8. - Actionneur rotatif selon la revendication 6 **caractérisé en ce que** chacun desdits plots de limitation (30, 31) de course s'étend perpendiculairement à un bras radial (32, 33), selon une direction opposée à la direction desdits plots de solidarisation.

9. - Actionneur rotatif selon la revendication précédente **caractérisé en ce que** chacun desdits plots de limitation de course (30, 31) s'étend perpendiculairement à un bras radial (32, 33) déformable élastiquement.

10. - Actionneur rotatif selon la revendication précédente **caractérisé en ce que** ledit bras radial déformable (32, 33) élastiquement est constitué par une patte fendue par une fente radiale.

11. - Actionneur rotatif selon les revendications 7 et 8 **caractérisé en ce que** lesdits bras radiaux s'étendent jusqu'à une zone annulaire intermédiaire, et sont reliés par des ponts (50 à 53) en forme d'épingle à cheveux s'étendant radialement, formant lesdites poutres élastiques fléchissantes (50 à 53).

12. - Actionneur rotatif selon la revendication précédente **caractérisé en ce que** lesdits bras radiaux et lesdits ponts (50 à 53) en forme d'épingle à cheveux s'étendent dans un premier plan, transversal, décalé par rapport à un second plan correspondant audit élément de centrage (58) formé de bras reliant une zone centrale annulaire pour le passage de l'axe du rotor, l'extrémité opposée desdits bras étant reliée au point de jonction entre un bras radial et un desdits ponts.

13. - Actionneur rotatif selon la revendication précédente **caractérisé en ce qu'**il comporte un aimant annulaire (24) entourant la zone intérieure comprise entre ledit axe et lesdits points de jonction entre un bras radial et un desdits ponts.

14. - Actionneur rotatif selon l'une des revendications précédentes **caractérisé en ce que** l'organe de commande (9) est sous la forme d'une fourchette d'accouplement.

15. - Actionneur rotatif selon l'une des revendications précédentes **caractérisé en ce que** l'extrémité avant de l'axe du rotor présente une configuration moletée pour recevoir une bague en laiton (12), une pièce en matière thermoplastique (10) étant surmoulée sur ladite bague (12) pour former l'organe de commande (9).

16. - Actionneur rotatif selon l'une des revendications précédentes **caractérisé en ce qu'**il comprend un capteur de position destiné à renvoyer une information de la position du rotor afin de connaître l'état d'actionnement.

17. - Système de commande de la valeur de levée des soupapes d'un moteur à explosion comportant un arbre à cames dont le déplacement est assuré par un levier entraîné par un actionneur rotatif selon l'une des revendications précédentes.

## Patentansprüche

1. Elektrisch gesteuerter bürstenloser Drehantrieb mit offener Schleife, umfassend einen gewickelten Stator (14, 15) und einen magnetisierten zylindrischen Rotor (21), der fest mit einem Zapfen (7) verbunden ist, der ein erstes Ende aufweist, das fest mit einem Steuerglied (9) verbunden ist, wobei das zweite Ende des Zapfens fest mit einem Hubbegrenzungsteil (23) verbunden ist, das sich zwischen zwei Anschlägen (34, 35, 36, 37) bewegt,
**dadurch gekennzeichnet, dass** das Hubbegrenzungsteil (23) aufweist:
• elastische, biegsame Riegel (50, 51, 52, 53),
• mindestens zwei Stifte (42, 43) für die feste Verbindung mit dem Rotor (21), die in Längsrichtung in komplementäre Aufnahmen eingreifen, die auf der Oberfläche des Jochs des Rotors (21) vorgesehen sind,
• mindestens zwei Hubbegrenzungsstifte (30, 31), die sich axial auf der Seite gegenüber den Stiften (42, 43) für die feste Verbindung erstrecken, die zwischen zwei Hubbegrenzungsanschlägen (34 bis 37) bewegbar sind,
• ein Element (58) für eine Zentrierung des Teils relativ zu dem Zapfen des Rotors (22),
• elastisch verformbare Bereiche (50 bis 53), die durch die elastischen, biegsamen Riegel (50, 51, 52, 53) ausgebildet werden, die einen Stift (42, 43) für die feste Verbindung mit dem nachfolgenden Hubbegrenzungsstift (30, 31) verbinden.

2. Drehantrieb nach Anspruch 1, **dadurch gekennzeichnet, dass** die biegsamen Riegel (50, 51, 52, 53) des Hubbegrenzungsteils (23) und das Steuerglied aus einem Material bestehen, dessen Verhältnis von Bruchspannung und dem Elastizitätsmodul größer als 0,020 und dessen Kerbschlagzähigkeit nach Charpy größer als 20 kJ/m² ist.

3. Drehantrieb nach Anspruch 2, **dadurch gekennzeichnet, dass** das Material, das für das eine und/oder das andere des Hubbegrenzungsteils (23) und des Steuerglieds (9) verwendet wird, ein ungeladenes thermoplastisches Material ist.

4. Drehantrieb nach Anspruch 1, **dadurch gekennzeichnet, dass** die Riegel (50, 51, 52, 53) symmetrisch sind, um eine identische Dämpfung von einem Ende des Hubs zu dem anderen zu ermöglichen.

5. Drehantrieb nach einem der vorstehenden Ansprüche, **dadurch gekennzeichnet, dass** er eine mechanische Feder für eine Rückführung der Bewegung in eine vordefinierte Position während einer Regelung in der offenen Schleife umfasst.

6. Drehantrieb nach einem der vorstehenden Ansprüche,
**dadurch gekennzeichnet, dass** das Hubbegrenzungsteil (23)
• ferner ein Mittel für eine Verankerung eines spiralförmigen Endes einer Feder (22) aufweist, wobei das entgegengesetzte Ende der Feder (22) fest mit dem Gehäuse (1) des Antriebs verbunden ist.

7. Drehantrieb nach dem vorstehenden Anspruch,
**dadurch gekennzeichnet, dass** jeder der Befestigungsstifte (42, 43) sich senkrecht zu einem radialen Arm erstreckt.

8. Drehantrieb nach Anspruch 6, **dadurch gekennzeichnet, dass** jeder der Hubbegrenzungsstifte (30, 31) sich senkrecht zu einem radialen Arm (32, 33) in einer Richtung, die der Richtung der Stifte für die feste Verbindung entgegengesetzt ist, erstreckt.

9. Drehantrieb nach dem vorstehenden Anspruch,
**dadurch gekennzeichnet, dass** jeder der Hubbegrenzungsstifte (30, 31) sich senkrecht zu einem elastisch verformbaren radialen Arm (32, 33) erstreckt.

10. Drehantrieb nach dem vorstehenden Anspruch,
**dadurch gekennzeichnet, dass** der elastisch verformbare radiale Arm (32, 33) aus einer Lasche besteht, die durch einen radialen Schlitz geschlitzt ist.

11. Drehantrieb nach Anspruch 7 und 8, **dadurch gekennzeichnet, dass** die radialen Arme sich bis zu einem ringförmigen Zwischenbereich erstrecken und durch haarnadelförmige Brücken (50 bis 53), die sich radial erstrecken, verbunden sind, die die elastischen, biegsamen Riegel (50 bis 53) ausbilden.

12. Drehantrieb nach dem vorstehenden Anspruch,
**dadurch gekennzeichnet, dass** die radialen Arme und die haarnadelförmigen Brücken (50 bis 53) sich in einer ersten Ebene erstrecken, die transversal ist, relativ zu einer zweiten Ebene versetzt ist, die dem Zentrierelement (58) entspricht, das aus Armen gebildet ist, die einen ringförmigen Mittelbereich für den Durchgang des Zapfens des Rotors verbinden, wobei das gegenüberliegende Ende der Arme mit dem Anschlusspunkt zwischen einem radialen Arm und einer der Brücken verbunden ist.

13. Drehantrieb nach dem vorstehenden Anspruch,
**dadurch gekennzeichnet, dass** er einen ringförmigen Magneten (24), der den inneren Bereich zwischen dem Zapfen und den Anschlusspunkten zwischen einem radialen Arm und einer der Brücken umgibt, vorweist.

14. Drehantrieb nach einem der vorstehenden Ansprüche,
**dadurch gekennzeichnet, dass** das Steuerglied (9) in Form einer Kupplungsgabel vorliegt.

15. Drehantrieb nach einem der vorstehenden Ansprüche,
**dadurch gekennzeichnet, dass** das vordere Ende des Zapfens des Motors eine gerändelte Konfiguration zum Aufnehmen eines Messingrings (12) aufweist, wobei ein Teil (10) aus thermoplastischem Material auf den Ring (12) aufgeformt ist, um das Steuerglied (9) auszubilden.

16. Drehantrieb nach einem der vorstehenden Ansprüche,
**dadurch gekennzeichnet, dass** er einen Positionssensor umfasst, der dafür bestimmt ist, eine Information über die Position des Rotors zurückzusenden, um den Antriebszustand zu kennen.

17. System zum Steuern des Ventilhubs eines Verbrennungsmotors, das eine Nockenwelle vorweist, deren Bewegung durch einen Hebel gewährleistet wird, der durch einen Drehantrieb nach einem der vorstehenden Ansprüche angetrieben wird.

## Claims

1. Brushless rotary actuator, which is electrically controlled in an open loop, comprising a wound stator (14, 15) and a magnetic cylindrical rotor (21) rigidly connected to a shaft (7) having a first end rigidly connected to a control member (9), the second end of said shaft being rigidly connected to a travel limiter (23) moving between two stops (34, 35, 36, 37), **characterized in that** said travel limiter (23) has:
bending resilient beams (50, 51, 52, 53),
at least two studs (42, 43) for securing to said rotor (21), which studs engage longitudinally in complementary recesses provided at the surface of the yoke of said rotor (21)
at least two travel limiter studs (30, 31) which extend axially on the side opposite said securing studs (42, 43) and are movable between two travel limiter stops (34 to 37),
an element (58) for centering said travel limiter relative to the shaft of the rotor (22),
elastically deformable zones (50 to 53) formed by said bending resilient beams (50, 51, 52, 53), which zones connect a securing stud (42, 43) to the consecutive travel limiter stud (30, 31).

2. Rotary actuator according to claim 1, **characterized in that** said bending beams (50, 51, 52, 53) of said travel limiter (23) and the control member are made of a material, the ratio of which between the breaking stress and the modulus of elasticity is greater than 0.020 and a Charpy notched impact strength greater than 20 kJ/m ².

3. Rotary actuator according to claim 2, **characterized in that** the material used for either/both of the travel limiter (23) and the control member (9) is an unfilled thermoplastic material.

4. Rotary actuator according to claim 1, **characterized in that** said beams (50, 51, 52, 53) are symmetrical to allow identical damping from one end of travel to the other.

5. Rotary actuator according to any of the preceding claims,
**characterized in that** it comprises a mechanical spring for returning the movement to a predefined position during open-loop controlling.

6. Rotary actuator according to any of the preceding claims,
**characterized in that** said travel limiter (23) further has
means for anchoring a spiral end of a spring (22), the opposite end of said spring (22) being rigidly connected to the housing (1) of said actuator.

7. Rotary actuator according to the preceding claim, **characterized in that** each of said securing studs (42, 43) extends perpendicularly to a radial arm.

8. Rotary actuator according to claim 6, **characterized in that** each of said travel limiter studs (30, 31) extends perpendicularly to a radial arm (32, 33), in a direction opposite to the direction of said securing studs.

9. Rotary actuator according to the preceding claim, **characterized in that** each of said travel limiter studs (30, 31) extends perpendicularly to an elastically deformable radial arm (32, 33).

10. Rotary actuator according to the preceding claim, **characterized in that** said elastically deformable radial arm (32, 33) is formed by a bracket split by a radial slot.

11. Rotary actuator according to claims 7 and 8, **characterized in that** said radial arms extend to an intermediate annular zone, and are connected by radially extending hairpin bridges (50 to 53), forming said bending resilient beams (50 to 53).

12. Rotary actuator according to the preceding claim, **characterized in that** said radial arms and said hairpin bridges (50 to 53) extend in a first transverse plane, offset with respect to a second plane corresponding to said centering element (58) formed by arms connecting an annular central zone for the passage of the rotor shaft, the opposite end of said arms being connected to the junction point between a radial arm and one of said bridges.

13. Rotary actuator according to the preceding claim, **characterized in that it** comprises an annular magnet (24) surrounding the interior zone comprised between said shaft and said junction points between a radial arm and one of said bridges.

14. Rotary actuator according to any of the preceding claims,
**characterized in that** the control member (9) is in the form of a coupling fork.

15. Rotary actuator according to any of the preceding claims,
**characterized in that** the front end of the rotor shaft has a knurled configuration for receiving a brass ring (12), a thermoplastic part (10) being overmolded on said ring (12) to form the control member (9).

16. Rotary actuator according to any of the preceding claims,
**characterized in that** it comprises a position sensor intended for providing information on the position of the rotor to determine the state of actuation.

17. System for controlling the lift value of the valves of an internal combustion engine comprising a camshaft, the movement of which is ensured by a lever driven by a rotary actuator according to any of the preceding claims.
